# FASCICULE DE BREVET EUROPEEN

(11) **EP 4 189 307 B1**
(45) Date de publication et mention de la délivrance du brevet: **17.07.2024**
(21) Numéro de dépôt: 21759338.3
(22) Date de dépôt: 29.07.2021
(51) Int. Cl.: F25D 3/10

(54) **DISPOSITIF POUR LA CONGELATION CRYOGENIQUE D'UNITES DE CONDITIONNEMENT D'UNE SUBSTANCE BIOLOGIQUE**
VORRICHTUNG ZUM KRYOGENEN GEFRIEREN VON EINHEITEN ZUM VERPACKEN EINER BIOLOGISCHEN SUBSTANZ
DEVICE FOR CRYOGENIC FREEZING OF UNITS FOR PACKAGING A BIOLOGICAL SUBSTANCE

(30) Priorité: 29.07.2020 FR 2008011
(43) Date de publication de la demande: 07.06.2023
(73) Titulaire: IMV Technologies, 61300 Saint-Ouen-sur-Iton (FR)
(72) Inventeur: SCHMITT, Eric, 53700 VILLAINES-LA-JUHEL (FR); GORGES, Jean-Charles, 72610 CHENAY (FR); DOUESNEL, Jean-Louis, 27250 RUGLES (FR); LOUVIOT, Thierry, 61300 SAINT SULPICE SUR RISLE (FR)
(74) Mandataire: Santarelli
(86) Numéro de dépôt international: PCT/FR2021/051423
(87) Numéro de publication internationale: WO 2022/023680

(56) Documents cités:
- GB-A- 435 476
- US-A- 1 748 324
- US-A- 1 817 605

## Description

### Domaine technique de l'invention

L'invention a trait à la conservation d'unités de conditionnement d'une substance biologique, notamment la cryogénisation des unités pour la conservation de la semence animale.

### Etat de la technique

On sait que pour certaines espèces animales, notamment les bovins et les équins, on traite la semence après prélèvement en la diluant puis la semence diluée est subdivisée en unités de conditionnement remplissant chacune une paillette formée par un tube mince en matière plastique et par un bouchon engagé dans ce tube, la dose de semence étant disposée entre le bouchon et l'extrémité du tube la plus éloignée du bouchon, le tronçon d'extrémité correspondant étant obturé après remplissage par écrasement et soudage.

La conservation des doses de semence contenues dans les paillettes se fait par immersion des paillettes dans un bain d'azote liquide.

Avant cette immersion, les paillettes sont congelées.

Une congélation lente (plusieurs heures) peut être opérée par suspension statique du produit à congeler dans des vapeurs d'azote, au-dessus d'un bain d'azote liquide.

Une congélation rapide (quelques minutes) peut être opérée à l'aide d'un congélateur programmable, régulant l'apport du fluide cryogénique au sein d'une cuve favorisant les échanges thermiques, par brassage d'air par exemple.

Outre une productivité accrue, l'avantage de la congélation rapide réside principalement dans la réduction de la taille des cristaux de glace, délétères pour les cellules biologiques.

En pratique, pour opérer une congélation rapide de paillettes on en dispose une pluralité sur un rack appelé rampe de congélation puis la rampe de congélation portant les paillettes est introduite dans le congélateur. En général, le congélateur est dimensionné pour recevoir plusieurs rampes de congélation superposées.

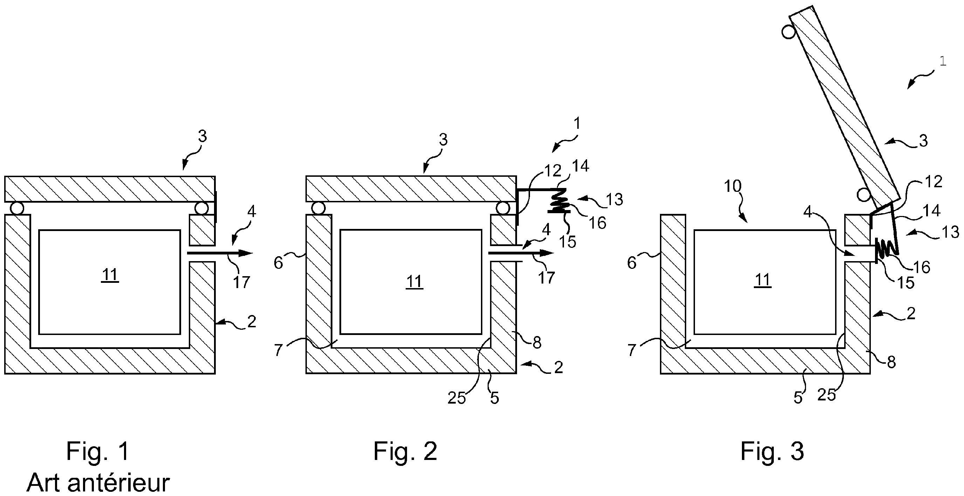

La figure 1 des dessins annexés montre un congélateur connu comportant un réceptacle 2, un couvercle 3 et un orifice 4. Le flux de vapeur d'azote liquide circule dans le réceptacle 2 à l'intérieur duquel sont disposées des produits 11 qui sont ici les paillettes sur les rampes de congélation.

Le couvercle 3 est articulé au réceptacle 2 de sorte que le congélateur puisse adopter une position fermée, montrée sur la figure 1, ou une position ouverte permettant d'introduire les produits 11 dans le réceptacle ou de les en récupérer. L'orifice 4 est ménagé dans le réceptacle 2 pour l'échappement des gaz, comme montré par la flèche 17 sur la figure 1, afin d'éviter toute surpression à l'intérieur du réceptacle 2 du congélateur lorsqu'il est en position fermée.

Les documents US 1 817 605 A, US 1 748 324 A et GB 435 476 A divulguent des dispositifs qui conviennent pour la congélation cryogénique d'unités de conditionnement d'une substance biologique.

### Exposé de l'invention

L'invention vise à fournir un dispositif de congélation limitant de manière simple, commode et économique l'élévation de la température au sein du réceptacle lorsque le couvercle est en position ouverte.

L'invention propose à cet effet un dispositif pour la congélation cryogénique d'unités de conditionnement d'une substance biologique, comportant :
- un réceptacle configuré pour qu'un flux de vapeur d'un agent cryogénique y circule, présentant en son sommet une ouverture d'introduction desdites unités de conditionnement dans ledit réceptacle ;
- un couvercle mobile entre une position fermée où il ferme ladite ouverture d'introduction et une position ouverte où il laisse libre ladite ouverture d'introduction ; et
- un orifice pour l'échappement de ladite vapeur, ménagé dans ledit réceptacle ;
caractérisé en ce que ledit dispositif comporte en outre un obturateur mécaniquement connecté audit couvercle de sorte que lorsque ledit couvercle est en position fermée, ledit obturateur est à l'écart dudit orifice et lorsque ledit couvercle est en position ouverte, ledit obturateur ferme ledit orifice.

L'invention est basée sur l'observation que lorsque le congélateur est en position ouverte, l'air ambiant, au contact des vapeurs d'azote, se refroidit, se contracte et pénètre dans le congélateur pour sortir au travers de l'orifice d'échappement des vapeurs ou des orifices d'échappement s'il y en a plusieurs ; et que c'est essentiellement cette circulation de l'air qui provoque une élévation graduelle de la température au sein du réceptacle du congélateur, dont il résulte en particulier une élévation de la température de la substance biologique contenue dans les unités de conditionnement les plus proches du couvercle.

Pour limiter l'élévation de la température dans le réceptacle lorsque le couvercle du dispositif de congélation est en position ouverte, le dispositif selon l'invention prévoit un obturateur de l'orifice relié au couvercle pour admettre une position où il ferme l'orifice lorsque le couvercle est en position ouverte.

Un tel obturateur, du fait de sa liaison avec le couvercle, permet de laisser libre l'orifice lorsque le couvercle est en position fermée et donc d'éviter toute surpression dans le réceptacle, et de limiter l'introduction d'air ambiant en position ouverte dans le réceptacle, la fermerture de l'orifice (voire des orifices s'il y en a plusieurs) empêche que l'air ambiant descende dans le réceptable et y circule jusqu'à en sortir par l'orifice d'échappement.

De par sa liaison directe avec le couvercle, l'obturateur ne nécessite pas d'actionneur dédié.

De plus, le risque de blocage du système par accumulation de givre est inexistant.

Des caractéristiques avantageuses particulièrement simples, commodes et économiques du dispositif pour la congélation cryogénique d'unités de conditionnement d'une substance biologique selon l'invention sont présentées ci-dessous :
- ledit obturateur est assujetti à un bord dudit couvercle ;
- ledit réceptacle comporte une paroi de fond et quatre parois latérales, respectivement une première paroi latérale, une deuxième paroi latérale, une troisième paroi latérale et une quatrième paroi latérale, la première paroi latérale étant en regard de la troisième paroi latérale, la deuxième paroi latérale étant en regard de la quatrième paroi latérale, la première paroi latérale et la troisième paroi latérale reliant la deuxième paroi latérale et la quatrième paroi latérale entre elles, chacune des parois latérales saillant de ladite paroi de fond et s'étendant jusqu'à ladite ouverture d'introduction, ledit orifice étant ménagé dans l'une desdites parois latérales ;
- ledit couvercle est relié à l'une des parois latérales dudit réceptacle au moyen d'un organe d'articulation formant charnière autour duquel pivote le couvercle de sorte à être mobile entre sa position ouverte et sa position fermée, ledit couvercle étant relié à la paroi latérale dans laquelle est ménagé ledit orifice ;
- ledit obturateur comporte un bras et une pastille d'obturation, le bras s'étendant en saillie d'un bord dudit couvercle à partir d'une première extrémité jusqu'à une deuxième extrémité libre, la pastille d'obturation étant reliée à ladite deuxième extrémité dudit bras de sorte que lorsque le couvercle est en position fermée ladite pastille d'obturation est à l'écart dudit orifice et lorsque le couvercle est en position ouverte ladite pastille d'obturation ferme ledit orifice ;
- la pastille d'obturation est directement assujettie à ladite deuxième extrémité du bras ;
- l'obturateur comporte en outre un ressort, ledit ressort étant, d'une part, assujetti à ladite deuxième extrémité dudit bras et d'autre part assujetti à ladite pastille d'obturation ;
- ledit obturateur comporte un bras et une pastille d'obturation, le bras s'étendant en saillie d'un bord dudit couvercle à partir d'une première extrémité jusqu'à une deuxième extrémité libre, l'obturateur pivotant autour de l'organe d'articulation avec une trajectoire en arc de cercle dont le rayon est égal à la longueur dudit bras, ledit orifice étant ménagé à une distance du sommet du réceptacle égale à la longueur dudit bras ;
- l'orifice est formé par un tube saillant du réceptacle, ladite pastille d'obturation prenant appui sur l'extrémité saillante dudit tube dans la position ouverte du couvercle ; et
- le dispositif est configuré pour la congélation cryogénique de paillettes contenant de la semence animale diluée.

### Brève description des figures

On va maintenant poursuivre l'exposé de l'invention par la description détaillée d'exemples de réalisation, donnée ci-après à titre illustratif et non limitatif, en référence aux dessins annexés. Sur ceux-ci :
[Fig 1] la figure 1 est une vue schématique en coupe d'un dispositif de congélation de l'art antérieur en position fermée ;
[Fig 2] la figure 2 est une vue schématique en coupe d'un dispositif de congélation selon l'invention en position fermée où l'obturateur laisse libre l'orifice en étant à l'écart de celui-ci ;
[Fig 3] la figure 3 est une vue schématique en coupe du dispositif de congélation similaire à la figure 2 mais en position ouverte où l'obturateur ferme l'orifice ;
[Fig 4] la figure 4 est un agrandissement du dispositif de congélation selon l'invention dans la position représentée sur la figure 2, rendant particulièrement visible l'obturateur; et
[Fig 5] la figure 5 est une vue similaire à la figure 4, sauf que le dispositif de congélation est dans la position ouverte représentée sur la figure 3.

### Description détaillée

Pour simplifier, dans la description qui suit, on a employé les mêmes références numériques pour les éléments communs entre l'art antérieur illustré sur la figure 1 et l'invention illustrée sur les figures 2 à 5.

Le dispositif 1 pour la congélation cryogénique d'unités de conditionnement de substances biologiques, en particulier de doses de semence animale, illustré sur les figures 2 et 3 comporte un réceptacle 2, un couvercle 3 et un orifice 4.

Le réceptacle 2 est configuré pour qu'un flux de vapeur d'un agent cryogénique y circule, l'agent cryogénique étant ici des vapeurs d'azote liquide, dans lesquelles est plongé un produit 11 à congeler tel que des paillettes remplies de semence disposées sur une ou plusieurs rampes de congélation superposées.

Le réceptacle 2 a la forme générale d'une boîte à section rectangulaire, avec une paroi de fond 5 et quatre parois latérales, respectivement une première paroi latérale 6, une deuxième paroi latérale 7, une troisième paroi latérale 8 et une quatrième paroi latérale non visible sur les dessins.

La première paroi latérale 6 est en regard de la troisième paroi latérale 8 et la deuxième paroi latérale 7 est en regard de la quatrième paroi latérale. La première paroi latérale 6 et la troisième paroi latérale 8 relient la deuxième paroi latérale 7 et la quatrième paroi latérale entre elles.

Chaque paroi latérale saille de la paroi de fond 5.

Les parois latérales 6, 7, 8, 9 comportent chacune une extrémité libre. Les extrémités libres des parois latérales délimitent une ouverture d'introduction 10 du réceptacle 2 en son sommet.

Cette ouverture d'introduction 10 permet l'introduction à l'intérieur du réceptacle 2 ou le retrait du réceptacle 2 du produit 11.

Le couvercle 3 est de forme parallélépipédique et est aux dimensions de l'ouverture d'introduction 10 du réceptacle 2.

Le couvercle 3 coopère avec le réceptacle 2. En particulier, le couvercle 3 est relié à l'une quelconque des parois latérales du réceptacle 2 au moyen d'un organe d'articulation 12 formant charnière.

Ici, le couvercle 3 est relié à la troisième paroi latérale 8.

L'orifice 4 est ménagé dans l'une des parois latérales du réceptacle et il est configuré pour permettre l'échappement des vapeurs (les vapeurs s'échappant étant représentés par la flèche 17 sur la figure 2) afin d'éviter toute surpression à l'intérieur du réceptacle 2 du dispositif 1 lorsque le couvercle 3 est en position fermée.

De plus, l'orifice 4 est ménagé dans la paroi latérale sur laquelle le couvercle 3 est relié, ici la troisième paroi latérale 8.

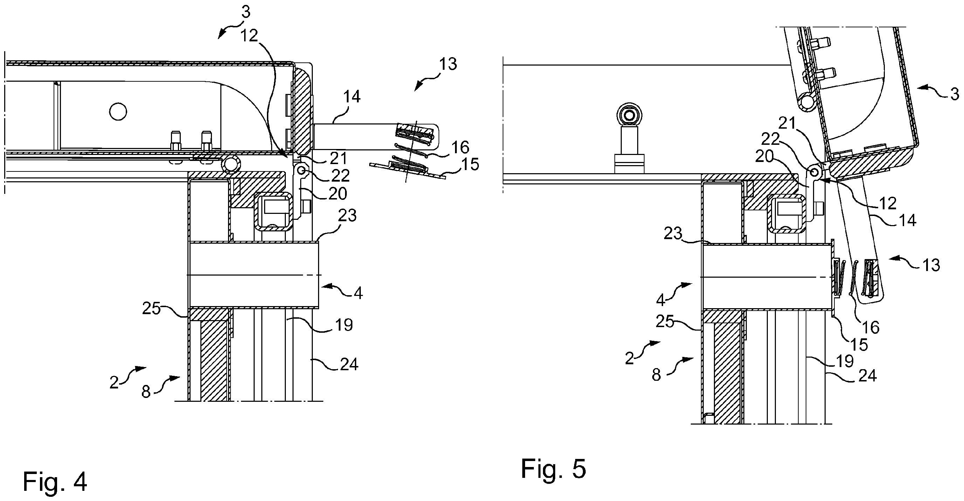

Les figures 4 et 5 représentent une vue en coupe du dispositif 1, montrant notamment l'orifice 4 ainsi que l'organe d'articulation 12 entre le couvercle 3 et la paroi latérale.

La paroi latérale 8 comportant l'orifice 4 est associée à un cadre 19 sur lequel est fixé l'organe d'articulation 12. Le cadre 19 est interposé entre la paroi latérale 8 et une paroi extérieure 24.

L'organe d'articulation 12 est configuré pour que le couvercle 3 soit mobile entre une position ouverte où il laisse libre l'ouverture d'introduction 10 et une position fermée où il ferme l'ouverture d'introduction 10.

L'organe d'articulation 12 est formé par une charnière dont un premier élément fixe 20 par rapport au réceptacle 2 lors de l'ouverture du couvercle 3 est fixé sur le cadre 19 du réceptacle 2, un deuxième élément mobile 21 par rapport au réceptacle 2 lors de l'ouverture du couvercle 3 est fixé sur le bord du couvercle 3 et dont un tourillon 22 disposé entre le premier élément fixe 20 et le deuxième élément mobile 21 délimite l'axe autour duquel le couvercle 3 pivote.

Le couvercle 3 a une trajectoire en arc de cercle entre sa position ouverte et sa position fermée.

L'orifice 4 est délimité par un tube 23 traversant la paroi latérale 8, à partir d'une face interne 25 au réceptacle 2 au moins jusqu'à une face externe de la paroi extérieure 24.

Comme visible sur les figures 4 et 5, le tube 23 s'étend en sailli de la paroi extérieure 24.

Le dispositif 1 comporte en outre un obturateur 13.

L'obturateur est mécaniquement connecté au couvercle 3 de sorte que lorsque le couvercle 3 est en position fermée, l'obturateur 13 est à l'écart de l'orifice 4 (figures 2 et 4) et lorsque le couvercle 3 est en position ouverte, l'obturateur 13 ferme l'orifice 4 (figures 3 et 5).

L'obturateur 13 est assujetti à un bord latéral du couvercle 3 et il est fixe par rapport au couvercle 3.

L'obturateur 13 comporte un bras 14, une pastille d'obturation 15 et un ressort 16.

Le bras 14 s'étend en saillie du bord du couvercle 3 à partir d'une première extrémité jusqu'à une deuxième extrémité qui est libre.

La pastille d'obturation 15 est configurée pour laisser libre l'orifice 4 lorsque le couvercle 3 est en position fermée et pour fermer l'orifice 4 lorsque le couvercle 3 est en position ouverte.

La pastille d'obturation 15 est reliée à la deuxième extrémité du bras 14.

Ici, le ressort 16 qui est interposé entre le bras 14 et la pastille d'obturation 15 est d'une part, assujetti à la deuxième extrémité du bras 14, et d'autre part, assujetti à la pastille d'obturation 15.

L'obturateur 13 pivote autour du tourillon 22 de l'organe d'articulation 12 avec une trajectoire en arc de cercle dont le rayon est égal à la longueur du bras 14.

La trajectoire en arc de cercle de l'obturateur 13 est coaxiale à la trajectoire en arc de cercle du couvercle 3.

L'orifice 4 est ménagé dans la paroi latérale 8 à une distance de son extrémité libre égale à la longueur du bras 14.

Dans la position ouverte du couvercle 3 illustrée sur les figures 3 et 5, la pastille d'obturation 15 prend appui sur une paroi bordant l'orifice 4.

Ici, la pastille d'obturation 15 prend appui sur l'extrémité du tube 23 saillant de la paroi extérieure 24.

La coopération du ressort 16 et de la pastille d'obturation 15 permet à l'obturateur 13 d'exercer une pression sur l'extrémité saillante du tube 23 grâce à quoi l'orifice 4 est fermé de façon étanche aux gaz.

Une fois l'orifice 4 fermé de façon étanche en position ouverte du couvercle 3, l'air ambiant, ayant initialement tendance à circuler à travers l'orifice 4 puisqu'au contact des vapeurs d'azote, il se refroidit et se contracte, reste désormais en surface du réceptacle 2.

Ainsi, l'élévation graduelle de la température au sein du réceptacle 2 du dispositif 1 est minime.

Dans des variantes non illustrées :
- la pastille d'obturation est directement assujettie au bras de l'obturateur ;
- le dispositif comporte une pluralité d'orifices d'échappement des vapeurs dans la paroi latérale et une pluralité d'obturateurs 13 coopérant avec la pluralité d'orifices ;
- le tube formant l'orifice ne saille pas de la paroi extérieure et s'étend jusqu'à la face externe de la paroi extérieure, la pastille d'obturation prenant appui contre la portion de paroi extérieure bordant l'orifice ;
- l'orifice est délimité différemment que par un tube, par exemple par un trou ménagé dans une paroi pleine ;
- l'obturateur est coulissant plutôt que pivotant, par exemple si l'orifice d'échappement est en communication fluidique avec un extracteur ; et/ou
- les paillettes de conditionnement disposées sur les rampes de congélation sont remplacées par d'autres unités de conditionnement d'une substance biologique, par exemple un tube de conditionnement d'embryons ou de sang.

## Revendications

1. Dispositif pour la congélation cryogénique d'unités de conditionnement d'une substance biologique, comportant :
- un réceptacle (2) configuré pour qu'un flux de vapeur d'un agent cryogénique y circule, présentant en son sommet une ouverture d'introduction (10) desdites unités de conditionnement dans ledit réceptacle (2) ;
- un couvercle (3) mobile entre une position fermée où il ferme ladite ouverture d'introduction (10) et une position ouverte où il laisse libre ladite ouverture d'introduction (10) ; et
- un orifice (4) pour l'échappement de ladite vapeur, ménagé dans ledit réceptacle (2) ;
**caractérisé en ce que** ledit dispositif (1) comporte en outre un obturateur (13) mécaniquement connecté audit couvercle (3) de sorte que lorsque ledit couvercle (3) est en position fermée, ledit obturateur (13) est à l'écart dudit orifice (4) et lorsque ledit couvercle (3) est en position ouverte, ledit obturateur (13) ferme ledit orifice (4).

2. Dispositif selon la revendication 1, **caractérisé en ce que** ledit obturateur (13) est assujetti à un bord dudit couvercle (3).

3. Dispositif selon l'une quelconque des revendications 1 ou 2, **caractérisé en ce que** ledit réceptacle (2) comporte une paroi de fond (5) et quatre parois latérales, respectivement une première paroi latérale (6), une deuxième paroi latérale (7), une troisième paroi latérale (8) et une quatrième paroi latérale, la première paroi latérale (6) étant en regard de la troisième paroi latérale (8), la deuxième paroi latérale (7) étant en regard de la quatrième paroi latérale, la première paroi latérale (6) et la troisième paroi latérale (8) reliant la deuxième paroi latérale (7) et la quatrième paroi latérale entre elles, chacune des parois latérales (6, 7, 8) saillant de ladite paroi de fond (5) et s'étendant jusqu'à ladite ouverture d'introduction (10), ledit orifice (4) étant ménagé dans l'une desdites parois latérales (6, 7, 8).

4. Dispositif selon la revendication 3, **caractérisé en ce que** ledit couvercle (3) est relié à l'une des parois latérales (6, 7, 8) dudit réceptacle (2) au moyen d'un organe d'articulation (12) formant charnière autour duquel pivote le couvercle (3) de sorte à être mobile entre sa position ouverte et sa position fermée, ledit couvercle (3) étant relié à la paroi latérale dans laquelle est ménagé ledit orifice (4).

5. Dispositif selon l'une quelconque des revendications 1 à 4, **caractérisé en ce que** ledit obturateur (13) comporte un bras (14) et une pastille d'obturation (15), le bras (14) s'étendant en saillie d'un bord dudit couvercle (3) à partir d'une première extrémité jusqu'à une deuxième extrémité libre, la pastille d'obturation (15) étant reliée à ladite deuxième extrémité dudit bras (14) de sorte que lorsque le couvercle (3) est en position fermée ladite pastille d'obturation (15) est à l'écart dudit orifice (4) et lorsque le couvercle (3) est en position ouverte ladite pastille d'obturation (15) ferme ledit orifice (4).

6. Dispositif selon la revendication 5, **caractérisé en ce que** la pastille d'obturation (15) est directement assujettie à ladite deuxième extrémité du bras (14).

7. Dispositif selon la revendication 5, **caractérisé en ce que** l'obturateur (13) comporte en outre un ressort (16), ledit ressort (16) étant, d'une part, assujetti à ladite deuxième extrémité dudit bras (14) et d'autre part assujetti à ladite pastille d'obturation (15).

8. Dispositif selon la revendication 4, **caractérisé en ce que** ledit obturateur (13) comporte un bras (14) et une pastille d'obturation (15), le bras (14) s'étendant en saillie d'un bord dudit couvercle (3) à partir d'une première extrémité jusqu'à une deuxième extrémité libre, l'obturateur (13) pivotant autour de l'organe d'articulation (12) avec une trajectoire en arc de cercle dont le rayon est égal à la longueur dudit bras (14), ledit orifice (4) étant ménagé à une distance du sommet du réceptacle (2) égale à la longueur dudit bras (14).

9. Dispositif selon l'une quelconque des revendications 5 à 8, **caractérisé en ce que** l'orifice (4) est formé par un tube (23) saillant du réceptacle (2), ladite pastille d'obturation (15) prenant appui sur l'extrémité saillante dudit tube (23) dans la position ouverte du couvercle (3).

10. Dispositif selon l'une quelconque des revendications 1 à 9, **caractérisé en ce que** le dispositif (1) est configuré pour la congélation cryogénique de paillettes contenant de la semence animale diluée.

## Patentansprüche

1. Vorrichtung zum kryogenen Einfrieren von Verpackungseinheiten für eine biologische Substanz, umfassend:
- einen Behälter (2), der so konfiguriert ist, dass ein Dampfstrom eines kryogenen Mittels darin zirkuliert, und der an seiner Oberseite eine Einführöffnung (10) für die Verpackungseinheiten in den Behälter (2) aufweist;
- einen Deckel (3), der zwischen einer geschlossenen Position, in der er die Einführöffnung (10) verschließt, und einer offenen Position, in der er die Einführöffnung (10) frei lässt, beweglich ist; und
- eine Öffnung (4) zum Ablassen des Dampfes, die in dem Behälter (2) ausgebildet ist;
**dadurch gekennzeichnet, dass** die Vorrichtung (1) ferner einen Verschluss (13) umfasst, der mechanisch mit dem Deckel (3) verbunden ist, so dass sich der Verschluss (13) entfernt von der Öffnung (4) befindet, wenn der Deckel (3) in der geschlossenen Position ist, und dass der Verschluss (13) die Öffnung (4) verschließt, wenn der Deckel (3) in der offenen Position ist.

2. Vorrichtung nach Anspruch 1, **dadurch gekennzeichnet, dass** der Verschluss (13) an einem Rand des Deckels (3) befestigt ist.

3. Vorrichtung nach einem der Ansprüche 1 oder 2, **dadurch gekennzeichnet, dass** der Behälter (2) eine Bodenwand (5) und vier Seitenwände umfasst, nämlich eine erste Seitenwand (6), eine zweite Seitenwand (7), eine dritte Seitenwand (8) und eine vierte Seitenwand, wobei die erste Seitenwand (6) der dritten Seitenwand (8) gegenüberliegt, wobei die zweite Seitenwand (7) der vierten Seitenwand gegenüberliegt, wobei die erste Seitenwand (6) und die dritte Seitenwand (8) die zweite Seitenwand (7) und die vierte Seitenwand miteinander verbinden, wobei jede der Seitenwände (6, 7, 8) von der Bodenwand (5) vorsteht und sich bis zur Einführöffnung (10) erstreckt, wobei die Öffnung (4) in einer der Seitenwände (6, 7, 8) ausgebildet ist.

4. Vorrichtung nach Anspruch 3, **dadurch gekennzeichnet, dass** der Deckel (3) mit einer der Seitenwände (6, 7, 8) des Behälters (2) über ein Gelenkelement (12) verbunden ist, das ein Scharnier bildet, um das der Deckel (3) schwenkt, um zwischen seiner offenen Position und seiner geschlossenen Position beweglich zu sein, wobei der Deckel (3) mit der Seitenwand verbunden ist, in der die Öffnung (4) ausgebildet ist.

5. Vorrichtung nach einem der Ansprüche 1 bis 4, **dadurch gekennzeichnet, dass** der Verschluss (13) einen Arm (14) und eine Verschlussplatte (15) umfasst, wobei sich der Arm (14) von einem Rand des Deckels (3) vorstehend von einem ersten Ende bis zu einem freien zweiten Ende erstreckt, wobei die Verschlussplatte (15) mit dem zweiten Ende des Arms (14) verbunden ist, so dass sich die Verschlussplatte (15) von der Öffnung (4) entfernt befindet, wenn der Deckel (3) in der geschlossenen Position ist, und die Verschlussplatte (15) die Öffnung (4) verschließt, wenn der Deckel (3) in der offenen Position ist.

6. Vorrichtung nach Anspruch 5, **dadurch gekennzeichnet, dass** die Verschlussplatte (15) direkt am zweiten Ende des Arms (14) befestigt ist.

7. Vorrichtung nach Anspruch 5, **dadurch gekennzeichnet, dass** der Verschluss (13) ferner eine Feder (16) umfasst, wobei die Feder (16) an einer Seite am zweiten Ende des Arms (14) befestigt ist und an der anderen Seite an der Verschlussplatte (15) befestigt ist.

8. Vorrichtung nach Anspruch 4, **dadurch gekennzeichnet, dass** der Verschluss (13) einen Arm (14) und eine Verschlussplatte (15) umfasst, wobei sich der Arm (14) von einem Rand des Deckels (3) vorstehend von einem ersten Ende bis zu einem freien zweiten Ende erstreckt, wobei der Verschluss (13) um das Gelenkelement (12) mit einer kreisbogenförmigen Bahn schwenkt, deren Radius gleich der Länge des Arms (4) ist, wobei die Öffnung (4) in einem Abstand von der Oberseite des Behälters (2) ausgebildet ist, der der Länge des Arms (14) entspricht.

9. Vorrichtung nach einem der Ansprüche 5 bis 8, **dadurch gekennzeichnet, dass** die Öffnung (4) durch ein Rohr (23) gebildet wird, das aus dem Behälter (2) vorsteht, wobei die Verschlussplatte (15) in der offenen Position des Deckels (3) auf dem hervorstehenden Ende des Rohrs (23) aufliegt.

10. Vorrichtung nach einem der Ansprüche 1 bis 9, **dadurch gekennzeichnet, dass** die Vorrichtung (1) zum kryogenen Einfrieren von Besamungsröhrchen konfiguriert ist, die verdünnte tierische Samen enthalten.

## Claims

1. Device for the cryogenic freezing of units for packaging a biological substance, comprising:
- a receptacle (2) configured in order for a flow of vapour of a cryogenic agent to flow therein, having at its top an opening (10) for introducing said packaging units into said receptacle (2);
- a lid (3) movable between a closed position in which it closes said introduction opening (10) and an open position in which it leaves said introduction opening (10) free; and
- an aperture (4) for venting said vapour, provided in said receptacle (2);
**characterized in that** said device (1) further includes an obturator (13) mechanically connected to said lid (3) such that when said lid (3) is in closed position, said obturator (13) is away from said aperture (4) and when said lid (3) is in an open position, said obturator (13) closes said aperture (4).

2. Device according to claim 1, **characterized in that** said obturator (13) is mechanically connected to an edge of said lid (3).

3. Device according to any one of claims 1 or 2, **characterized in that** said receptacle (2) comprises a bottom wall (5) and four lateral walls, respectively a first lateral wall (6), a second lateral wall (7), a third lateral wall (8) and a fourth lateral wall, the first lateral wall (6) being opposite the third lateral wall (8), the second lateral wall (7) being opposite the fourth lateral wall, the first lateral wall (6) and the third lateral wall (8) connecting together the second lateral wall (7) and the fourth lateral, each of the lateral walls (6, 7, 8) projecting from said bottom wall (5) and extending up to said introduction opening (10), said aperture (4) being provided in one of said lateral walls (6, 7, 8).

4. Device according to claim 3, **characterized in that** said lid (3) is linked to one of the lateral walls (6, 7, 8) of said receptacle (2) by means of an articulation member (12) forming a hinge around which the lid (3) pivots so as to be movable between its open position and its closed position, said lid (3) being connected to the lateral wall in which said aperture (4) is provided.

5. Device according to any one of claims 1 to 4, **characterized in that** said obturator (13) comprises an arm (14) and a obturating plate (15), the arm (14) projecting from an edge of said lid (3) from a first end up to a second free end, the obturating plate (15) being connected to said second end of said arm (14) such that when the lid (3) is in closed position said obturating plate (15) is at a distance from said aperture (4) and when the lid (3) is in open position said obturating plate (15) closes said aperture (4).

6. Device according to claim 5, **characterized in that** the obturating plate (15) is directly mechanically connected to said second end of the arm (14).

7. Device according to claim 5, **characterized in that** the obturator (13) further includes a spring (16), said spring (16) being, on the one hand, mechanically connected to said second end of said arm (14) and, on the other hand, mechanically connected to said obturating plate (15).

8. Device according to claim 4, **characterized in that** said obturator (13) comprises an arm (14) and an obturating plate (15), the arm (14) projecting from an edge of said lid (3) from a first end to a free second end, the obturator (13) pivoting about the articulation member (12) with a path in a circle arc of which the radius is equal to the length of said arm (14), said aperture (4) being provided at a distance from the top of the receptacle (2) equal to the length of said arm (14).

9. Device according to any one of claims 5 to 8, **characterized in that** the aperture (4) is formed by a tube (23) projecting from the receptacle (2), said obturating plate (15) bearing on the projecting end of said tube (23) in the open position of the lid (3).

10. Device according to any one of claims 1 to 9, **characterized in that** the device (1) is configured for the cryogenic freezing of straws containing diluted animal semen.
